# EUROPÄISCHE PATENTSCHRIFT

(11) **EP 1 824 627 B1**
(45) Veröffentlichungstag und Bekanntmachung des Hinweises auf die Patenterteilung: **08.05.2013**
(21) Anmeldenummer: 05807608.4
(22) Anmeldetag: 25.11.2005
(51) Int. Cl.: B24B 5/42, B23C 3/06, B23P 15/00, B23P 13/00, B23C 5/10

(54) **Verfahren und Werkzeugmaschine zum Bearbeiten der Lagersitze von Wellen**
Method and machine for machining shaft bearing seats
Procédé et machine pour usiner des logements de paliers d'arbres

(30) Priorität: 26.11.2004 DE 102004057111
(43) Veröffentlichungstag der Anmeldung: 29.08.2007
(73) Patentinhaber: NILES-SIMMONS Industrieanlagen GmbH, 09117 Chemnitz (DE)
(72) Erfinder: NAUMANN, Hans, J., Albany, NY 12204 (US); HABERKORN, Jürgen, 09117 Chemnitz (DE); HERTEL, Matthias, 09126 Chemnitz (DE); GERHARD, Wolfgang, 09119 Chemnitz (DE)
(74) Vertreter: Grättinger Möhring von Poschinger Patentanwälte Partnerschaft
(86) Internationale Anmeldenummer: PCT/EP2005/012634
(87) Internationale Veröffentlichungsnummer: WO 2006/056460

(56) Entgegenhaltungen:
- EP-A- 0 912 282
- EP-A- 1 030 755
- EP-A- 1 428 612
- WO-A-97/32680
- AT-B- 286 067
- DE-A1- 2 822 346
- DE-A1- 4 446 475
- DE-A1- 19 749 939
- DE-A1-102004 022 360
- DE-C- 212 950
- US-B1- 6 684 500
- US-B1- 6 752 709

## Beschreibung

Die Erfindung betrifft, wie im Oberbegriff des Anspruchs 1 angegeben, ein Verfahren zum Bearbeiten der Lagersitze von durch Schmieden oder Gießen urgeformten Wellen, insbesondere Kurbelwellen, wobei die Lagersitze nach dem Urformen einer Welle mehreren Bearbeitungsoperationen unterzogen werden. Ein solches Verfahren ist beispielweise aus EP 1 030 755 B1 bekannt.

Herkömmlicherweise werden die Lagersitze von Wellen, beispielsweise die Sitze der Hauptlager und der Hublager von Kurbelwellen, mehrstufig spanabhebend bearbeitet. Gemäß einer insoweit typischen Bearbeitungsfolge wird zunächst die geschmiedete oder gegossene Kurbelwelle durch Drehen, Fräsen oder Drehräumen vorbearbeitet, dann durch Schleifen zwischenbearbeitet und schließlich einer Finish-Bearbeitung unterzogen. Insbesondere seit sich eingebürgert hat, die Lagersitze, nicht zuletzt um diese im Laufe der weiteren Fertigung vor Beschädigung zu schützen, zu härten, umfasst die Bearbeitung regelmäßig, anschließend an das Härten, ein Umlaufschleifen; denn das Schleifen war lange Zeit das einzige brauchbare Verfahren, um Lagersitze, nachdem diese gehärtet worden sind, auf ihr Endmaß zu bringen.

Wiederholt ist auch das Drehfräsen der Lagersitze von Wellen vorgeschlagen worden, beispielsweise bereits in der DE 212950 und der AT 286067. Dabei wird jeweils ein Fräser, der sich um eine auf der Achse des zu bearbeitenden Lagersitzes senkrecht stehende Rotationsachse dreht, mit tangentialem Vorschub an dem rotierenden Werkstück vorbeigeführt. In jüngerer Zeit sind solche Anregungen wieder aufgegriffen worden, insbesondere um - wegen des mit der Entsorgung der beim Schleifen anfallenden Abfallprodukte verbundenen Aufwands - ein Naßschleifen zu vermeiden.

So schlägt die WO 97/32680 Al (nachfolgend wird dieses Dokument kurz als D1 bezeichnet) ein ohne Naßschleifen auskommendes Verfahren zur Bearbeitung der Lagersitze von Kurbelwellen vor, bei dem die Kurbelwelle mittels einer Aufnahmeeinrichtung, in welcher sie eingespannt und um ihre mit der C-Achse der Maschine zusammenfallende Längsachse drehbar antreibbar gelagert ist, mit ca. 20 bis 100 Umdrehungen pro Minute gedreht und mit einem Fräswerkzeug bearbeitet wird, welches in einer Werkzeugspindel um seine - zur X-Richtung der Maschine parallele - A-Achse rotierbar, längs seiner Achse zum Werkstück hin zustellbar und senkrecht zu seiner Achse (in Y-Richtung der Maschine; tangential zum Werkstück) vorschiebbar ist. Die entsprechende Bearbeitung erfolgt dabei in zwei Stufen.

Nach den Erläuterungen in D1 (Seite 11, Zeilen 11 bis 25) soll, um den unterschiedlichen Beanspruchungen des Schneidwerkzeugs und den zu erzielenden Qualitäten des Bearbeitungsvorgangs Rechnung zu tragen, die tangentiale Vorschubgeschwindigkeit so gesteuert werden, daß während der Vorbearbeitungsphase (Schruppen) die Umfangsschneiden des Fräswerkzeugs optimale Schnittbedingungen haben und während des Fertigbearbeitens (Schlichten) des Laufsitzes die Stirnscheiden den ganzen Laufsitz erfassen können. Gemäß Seite 4, Zeile 27 bis Seite 5, Zeile 9 von D1 können durch entsprechend hohe Drehzahlen des Drehfräswerkzeugs die beim High-Speed-Cutting erforderlichen hohen Schnittgeschwindigkeiten erreicht und die Kurbelwelle trotzdem mit der üblichen Drehzahl bis zu ca. 100 min⁻¹ gedreht werden, die auch beim Schleifen zur Erzielung der hohen Qualitäten des Werkstücks zum Einsatz kommt. Durch die hohen Schnittgeschwindigkeiten sei die Werkstückbeanspruchung klein und es lasse sich eine sehr gute Raumgeometrie erreichen. Bei auf die Kontur des Lagersitzes abgestimmtem Werkzeug ermögliche der tangentiale Vorschub des Drehfräswerkzeugs die Bearbeitung der gesamten Breite des Laufsitzes in einem Arbeitsgang. Die herkömmlicherweise vorgesehenen Schritte Vorbearbeitung und Schleifbearbeitung der Lagersitze könnten - in einer Maschine und mit einer Einspannung der Kurbelwelle - zu einem Arbeitsschritt zusammengefaßt und damit eine erhebliche Rationalisierung erreicht werden. An dem Fräswerkzeug sind drei aus gängigen Schneidstoffarten bestehende, jeweils eine stirnseitige und eine umfangsseitige Schneide aufweisende Schneidplatten vorgesehen. Die Schneidplattengeometrie ist der Geometrie des zu bearbeitenden Lagersitzes hinsichtlich Übergangsradius, Planschulter usw. angepaßt (vgl. D1 Seite 6, Zeile 33 bis Seite 7, Zeile 5).

Angesichts der Hubhöhe der Kurbelwelle muß das bekannte Drehfräswerkzeug sehr lang gestreckt sein (Auskraglänge), um die Bearbeitung des Lagersitzes vornehmen zu können (vgl. D1 Seite 8, Zeilen 18 bis 20).

Zusammenfassend werden in D1 ein Verfahren und eine Vorrichtung vorgeschlagen, die durch Verwendung des Hochgeschwindigkeitsdrehfräsens kurze Zykluszeiten und eine sehr gute Qualität bei der Bearbeitung der (ungehärteten) Lagersitze von Kurbelwellen erreichbar machen sollen, so daß auf den Bearbeitungsschritt des Schleifens ganz verzichtet werden könne (vgl. D1 Seite 15, Zeilen 22 bis 27).

Aus der EP 1 030 755 B1 (nachfolgend wird dieses Dokument kurz als D2 bezeichnet) ist das Bearbeiten von Kurbelwellen durch die Abfolge der Bearbeitungsschritte Spanen - Härten - Spanen - Finishen bekannt. Dazu wird ausgeführt, daß vor allem bei Stahlkurbelwellen die Lagerflächen in deren oberflächennahen Bereichen gehärtet werden. Dies dient einer erhöhten Abriebfestigkeit der Lagerstellen, einer Vorbeugung von Beschädigungen dieser Lagerflächen beim Handling während des gesamten Herstellungsprozesses sowie der Beeinflussung der Festigkeitseigenschaften der Kurbelwelle (vgl. D2 Spalte 1, Zeilen 23 bis 30). Technischer Ausgangspunkt der Überlegungen von D2 ist das herkömmliche Bearbeiten von Kurbelwellen in vier Schritten: Der erste Schritt ist die spanende Bearbeitung mit bestimmter Schneide; in diesem Zusammenhang wird auch das Drehfräsen, insbesondere das Hochgeschwindigkeitsfräsen genannt. Im nachfolgenden zweiten Bearbeitungsschritt wird die Lagerfläche der Kurbelwelle gehärtet. Der dritte Schritt betrifft das Schleifen mittels eines harten, massiven Schleifwerkzeugs, beispielsweise einer Schleifscheibe. Im vierten Schritt schließlich erfolgt das Finishen durch ein in der Regel stillstehendes Schleifband oder Schleifstein, welches an den Außenumfang der rotierenden Lagerstelle der Kurbelwelle angedrückt wird. Das abgetragenen Materialaufmaß bewegt sich beim Finishen im Bereich von 1 bis 10 µm (vgl. D2 Spalte 2, Zeile 32 bis Spalte 3, Zeile 15).

Um die Kosten bei der Kurbelwellenbearbeitung zu senken, wird nach D2 angestrebt, die Bearbeitung der Lagerstellen von vier auf drei unterschiedliche Bearbeitungsschritte zu reduzieren (vgl. D2 Spalte 3, Zeile 21 bis 24). Durch das Weglassen der Schleifbearbeitung wird die Bearbeitungsfolge von vier auf nur drei prinzipiell unterschiedliche Bearbeitungsverfahren reduziert. Damit sollen nicht nur Entsorgungsprobleme bei der Beseitigung von Schleifschlamm wegfallen, sondern auch Investitionskosten für Schleifmaschinen, die Kosten für den Werkzeugverbrauch und nicht zuletzt der durch das Schleifen erhöhte Bestand an Werkstücken durch verlängerte Umlaufzeiten der Werkstücke. Demgegenüber sei die Entsorgung der Späne der spanenden Bearbeitung unproblematisch, da entweder (Hochgeschwindigkeitsfräsen) trocken geschnitten werde oder die Trennung Späne - Öl wegen der viel geringeren spezifischen Oberfläche der Späne gegenüber Schleifstaub vollständig möglich sei (vgl. D2 Spalte 4, Zeilen 21 bis 33).

Weiterhin müsse berücksichtigt werden, daß beim bisherigen Schleifen von Lagerstellen die aus der spanenden Vorbearbeitung resultierenden Rundheitsabweichungen durch das Schleifen in der Regel nur in ihrem Absolutwert reduziert würden, jedoch nicht in ihrer Charakteristik. Es würden also aus langwelligen Rundheitsabweichungen keine kurzwelligen Rundheitsabweichungen durch das Schleifen, sondern es würde die Anzahl der Wellentäler entweder beibehalten oder gar reduziert, mit der Folge, daß die weitere Verbesserung der Rundheitsabweichungen durch das Finishen, betrachtet in Ergebnisverbesserung pro Zeiteinheit, beim Finishen eher erschwert wurde (vgl. D2 Spalte 7, Zeile 49 bis Spalte 8, Zeile 3).

Nach dem Härten kann nach D2 nochmals eine Materialabnahme durch spanende Bearbeitung durchgeführt werden, insbesondere der zweite spanende Bearbeitungsschritt (Fertigspanen) eines zweistufigen Zerspanens (vgl. D2 Spalte 9, Zeilen 20 bis 24).

Den Aussagen in D1 und D2 ist demnach gemeinsam, mittels einer mehrstufigen Drehfräsbearbeitung der Lagersitze das Naßschleifen zu vermeiden. Damit könnten, wie dargelegt, bei ungehärteten (vgl. D1) wie auch bei gehärteten (vgl. D2) Lagersitzen die Qualität der Fertigung gesteigert und die Kosten gesenkt werden, die durch Beseitigen des Schleifschlammes anfallen. Die einhellige, bekannte Auffassung geht infolge dessen dahin, die mehrstufige Drehfräsbearbeitung in die Vorbearbeitung zu integrieren. Gegen diese Auffassung spricht auch nicht, daß als mögliche Kombination von Bearbeitungsfolgen bis zum verwendungsfähigen Zustand einer Kurbelwelle genannt wird: Spanen - Härten - Spanen - Finishen (vgl. D2 Spalte 4, Zeilen 50 bis 54).

Aus der AT 286067, nachfolgend als Dokument D3 bezeichnet, ist eine Fräsmaschine für Kurbelwellen bekannt. Die Fräsmaschine besteht aus einem Bett, an dem einerseits die die bearbeitende, motorisch angetriebene Kurbelwelle um ihre Achse drehbar gelagert ist und an dem andererseits ein die Frässpindel tragender Horizontalschlitten quer zur Kurbelwellenachse verschiebbar geführt ist, dessen Bewegung von einer mit der Kurbelwelle gekuppelten Steuereinrichtung abgeleitet ist. Auf dem Horizontalschlitten ist ein die Frässpindel aufnehmender Vertikalschlitten geführt, wobei die Achse der Frässpindel zur Kurbelwellenachse senkrecht verläuft, und die Steuereinrichtung, welche die Lage, die die Kurbelwelle in jedem Augenblick ihrer Drehbewegung einnimmt, in eine vertikale und in eine horizontale Komponente zerlegt, an einen Verstärker angeschlossen ist, der die Werte der beiden Komponenten den Antriebsvorrichtungen für die beiden Schlitten zuleitet.

Die vorliegende Erfindung setzt an der Erkenntnis an, dass ausgehend von der strukturellen Komplexität von Kurbelwellen und anderen Wellen mit Lagersitzen, insbesondere mit exzentrischen Lagersitzen, eine Optimierung von Herstellungskosten und Arbeitsergebnis mit den bekannten Maßnahmen allein nicht erreicht werden kann. Sie hat sich die Aufgabe gestellt, ein Verfahren zur Bearbeitung der Lagersitze von Wellen bereitzustellen, welches zu einer Fertigung hohen Qualitätsanforderungen genügenden und gute Betriebseigenschaften aufweisenden Wellen zu vergleichsweise geringen Kosten beitragen kann.

Erfindungsgemäß wird diese Aufgabe gelöst durch ein Verfahren zum Bearbeiten der Lagersitze von durch Schmieden oder Gießen urgeformten Wellen, insbesondere Kurbelwellen, wobei die Lagersitze nach dem Urformen durch spanabhebende Bearbeitung mit bestimmter Schneide vorgeformt und den folgenden Bearbeitungsoperationen unterzogen werden:
- Vorschnitt-Drehfräsen und
- Fertigschnitt-Drehfräsen, mit einem einzigen Stirnfräser dadurch gekennzeichnet, dass das Vorschnitt-Drehfräsen und das Fertigschnitt-Drehfräsen während jeweils im wesentlichen einer vollständigen Umdrehung der Welle ohne Längsvorschub und ohne tangentialen Vorschub des Fräsers erfolgt und die Zustellung des Fräsers während des Eintauchens zu Beginn des Vorschnitt-Drehfräsens und zu Beginn des Fertigschnitt-Drehfräsens bezogen auf die Achse des Fräsers allein eine axiale Komponente aufweist, während die Welle um einen bestimmten Betrag gedreht wird, wobei die Achse des Drehfräswerkzeugs während der Drehfräsbearbeitung gegenüber der Achse des zu bearbeitenden Lagersitzes um eine Exzentrizität versetzt ist.

Somit erfolgt erfindungsgemäß ein mehrstufiger Prozess der spanabhebenden Bearbeitung mit bestimmter Schneide durch Drehfräsen mit einem Vorschnitt und einem Fertigschnitt, wobei sich jeweils während des betreffenden Umlaufs der Welle, d.h. zwischen dem Anschnitt und dem Austritt des Fräsers, die Lage des Fräsers relativ zu der Achse des zu bearbeitenden Lagers nicht ändert. Die Achse des Drehfräswerkzeugs ist während der Drehfräsbearbeitung gegenüber der Achse des zu bearbeitenden Lagersitzes um eine Exzentrizität versetzt, welche während der entsprechenden Bearbeitungsstufe, bevorzugt einschließlich der Phasen des Eintauchens und des Ausfahrens des Werkzeugs, beibehalten wird, d.h. konstant ist. Die nach dem Fertigschnitt-Drehfräsen noch bestehenden Oberflächenunebenheiten verlaufen verfahrensbedingt nicht parallel, sondern vielmehr quer zur Bewegungsrichtung im Lager. Damit werden sie im Betrieb schneller egalisiert, und die Gefahr, dass an ihnen der Schmierfilm örtlich abreißt, ist geringer als im Falle von längs zur Bewegungsrichtung im Lager verlaufenden Riefen.

Indem während der Drehfräsbearbeitung eine Vorschubbewegung des Fräsers quer zu seiner Längsachse, d.h. in Y-Richtung bzw. tangential zum Werkstück nicht erfolgt, richtet sich die Bearbeitungsgeschwindigkeit (relativer Vorschub) allein nach der Umdrehungsgeschwindigkeit der Welle und dem Radius des zu bearbeitenden Lagersitzes. Dabei werden beispielsweise folgende Bearbeitungsgeschwindigkeiten erreicht: Relativer Vorschub zwischen etwa 200 mm/min und 9000 mm/min, bevorzugt zwischen etwa 600 mm/min und 1500 mm/min; Schnittgeschwindigkeit etwa zwischen 60 m/min und 600 m/min, bevorzugt zwischen etwa 80 m/min und 120 m/min. Der Versatz der Achse des Präsers zur Achse des zu bearbeitenden Lagersitzes ist abhängig von der Lagergeometrie und entspricht bevorzugt etwa dem 0,1- bis 0,25-fachen Wert, besonders bevorzugt dem 0,15- bis 0,2-fachen Wert des Durchmessers des Fräsers. Durch die Exzentrizität des Fräsers können die Stirnschneiden den kompletten Lagersitz überdecken. Die Exzentrizität kann zur Verringerung des Schwingungeverhaltens optimiert werden. Die Welle kann während der Drehfräsbearbeitung in Richtung der Exzentrizität oder aber in der Gegenrichtung gedreht werden.

Aufgrund der Härte des abzutragenden Materials und der Mehrstufigkeit der Drehfräs-Bearbeitung fallen nur relativ kleine, ausgeglühte Späne an, die trocken und problemlos zu entsorgen sind. Indem die Kurbel- oder sonstige Welle während des vorschnitt-Drehfräsens wie auch während des Fertigschnitt-Drehfräsens größenordnungsmäßig jeweils nur um etwa eine vollständige Umdrehung gedreht wird, was, wie weiter unten näher ausgeführt wird, ein Drehen der Welle um etwa eineinhalb vollständige Umdrehungen einschließt, lässt sich die Drehfräsbearbeitung innerhalb minimaler Zeit durchführen.

Gemäß einem besonderen, bevorzugten Aspekt der vorliegenden Erfindung wird das Werkstück nach dem Vorschnitt-Drehfräsen vermessen und die Zustellung des Fräsers für das Fertigschnitt-Drehfräsen in Abhängigkeit von dem Ergebnis dieser Messung ermittelt. Das Vermessen der Lagersitze nach dem Vorschnitt-Drehfräsen erfolgt dabei an der eingespannten Welle, so dass das Vorschnitt-Drehfräsen, Vermessen und Fertigschnitt-Drehfräsen sich in unmittelbarer Abfolge vollzieht. Je nach den individuellen Gegebenheiten kann bei den einzelnen Schritten der Drehfräs-Bearbeitung der Lagersitze jeweils ein gleich großes oder aber ein unterschiedliches Aufmaß der Bearbeitungsfläche abgetragen werden. Besonders günstig ist dabei regelmäßig der an zweiter Stelle genannte Fall, und zwar dergestalt, dass das nach dem Härten bestehende Aufmaß bevorzugt zu etwa 60 bis 80%, besonders bevorzugt zu etwa 65 bis 75%, während des Vorschnitt-Drehfräsens und der Rest während des Fertigschnitt-Drehfräsens abgetragen wird.

Je nach den Anforderungen an die Oberflächengüte sowie anderen Randbedingungen kann sich an das Drehfräsen noch ein Finishen der Lagersitze anschließen oder aber auch nicht. Unter Kostengesichtspunkten ist dabei eine Verfahrensführung ohne Finishen besonders zu bevorzugen. Dies ist auch grundsätzlich realisierbar.

Gemäß der Erfindung weist die Zustellung des Fräsers während des Eintauchens zu Beginn des Vorschnitt-Drehfräsens und zu Beginn des Fertigschnitt-Drehfräsens bezogen auf die Achse des Fräsers jeweils allein eine axiale Komponente auf. Der Fräser wird, mit anderen Worten, jeweils längs seiner Längsachse zugestellt und setzt radial auf das Werkstück auf, während die Welle um einen bestimmten Betrag (s.u.) gedreht wird. Dies ist von Vorteil, um beim Eintauchen des Fräsers in das abzutragende Material das Entstehen einer "Delle" zu verhindern. Indem auf diese Weise eine solche Dellenbildung vermieden werden kann, kann das vor dem Drehfräsen bestehende Aufmaß entsprechend gering ausfallen (z.B. nur 0,35 mm), was sich günstig auf die Wirtschaftlichkeit der mehrstufigen Drehfräsbearbeitung auswirkt. Als besonders günstig hat sich erwiesen, wenn sich das Eintauchen des Fräsers in das abzutragende Material auf seine für das Vorschnitt-Drehfräsen maßgebliche Stellung über einen Drehwinkel der Kurbel- bzw. sonstigen Welle von etwa 3 bis 15°, besonders bevorzugt etwa 5° erstreckt. Entsprechendes gilt für das Eintauchen des Fräsers beim Fertigschnitt-Drehfräsen.

Eine andere bevorzugte Weiterbildung der Erfindung zeichnet sich dadurch aus, daß der Durchmesser des zum Drehfräsen eingesetzten Fräsers größer ist als die Breite des zu bearbeitenden Lagersitzes. Besonders bevorzugt beträgt der Durchmesser des zum Drehfräsen verwendeten Fräsers etwa den 1,15- bis 1,35-fachen Betrag der Breite des zu bearbeitenden Lagersitzes. In diesem Falle wird zweckmäßigerweise während des Vorformens beidseitig des zu erzeugenden Lagersitzes jeweils ein Freistich eingebracht, in dem der Fräser bei der Drehfräsbearbeitung auslaufen kann. Bei Berücksichtigung dieser Parameter ergibt sich ein für die Aufrechterhaltung eines Schmiermittelfilmes günstiger Verlauf der auf der Oberfläche der Lagersitze nach der Drehfräsbearbeitung verbleibenden Unebenheiten.

Wird die vorliegende Erfindung für die Bearbeitung der Lagersitze einer Kurbelwelle eingesetzt, so ist von Vorteil, wenn die Kurbelwelle für die mehrstufige Drehfräs-Bearbeitung auf der Seite ihres Flansches in einem ersten drehbaren Spannfutter und auf der Seite ihres Zapfens in einem zweiten drehbaren Spannfutter eingespannt wird. Besonders bevorzugt sind dabei beide Spannfutter synchron antreibbar und drehen sich mit der Umlaufgeschwindigkeit zwischen 1 und 100 min⁻¹.

Die Lagersitze der einzelnen Hauptlager einer Kurbelwelle werden zweckmäßigerweise nacheinander mit einem einzigen Drehfräswerkzeug bearbeitet, während die Kurbelwelle bevorzugt gleichzeitig an mindestens einem benachbarten Hauptlager in radialer Richtung von einer bzw. von zwei Lünetten abgestützt wird. Durch die Lünettenabstützung wird vermieden, daß sich die Kurbelwelle unter den Bearbeitungskräften verbiegt und sich somit das Bearbeitungsergebnis verschlechtert.

In entsprechender Weise werden die Lagersitze der einzelne Hublager zweckmäßigerweise nacheinander mit einem einzigen Drehfräswerkzeug bearbeitet, während die Kurbelwelle gleichzeitig an mindestens einem dem bearbeiteten Hublager benachbarten Hauptlager in radialer Richtung von einer Lünette abgestützt wird.

Alternativ können jeweils gleichzeitig mehrerer Haupt- oder Hublager mit mehreren Drehfräswerkzeugen bearbeitet werden. Dabei ist eine entsprechende Mehrzahl von Drehfräswerkzeugen vorgesehen.

Besonders vorteilhaft ist, wenn für die mehrstufige Drehfräsbearbeitung eines jeden Lagersitzes ein eigenes individuelles NC-Steuerungsprogramm abläuft. Eine derartige individuelle Steuerung setzt das Vorhandensein von Meßorganen und Meßprogrammen voraus, mit welchen das individuelle Bearbeitungsergebnis der Vorschnitt-Drehfräs-bearbeitung unmittelbar erfaßt und im NC-Programm der Maschine für die Bearbeitung des betreffenden Lagersitzes während der Fertigschnitt-Drehfräsbearbeitung verwendet wird. Vorzugsweise wird, wie dargelegt, nach dem Vorschnitt der mehrstufigen Drehfräsbearbeitung gemessen und anschließend die Zustellung für den Fertigschnitt vorgenommen. Dank neuzeitlicher Entwicklungen ist eine derart komplexe NC-Steuerung der Bearbeitungsmaschine heutzutage ohne weiteres möglich.

Das erfindungsgemäße Verfahren lässt sich insbesondere auf einer Werkzeugmaschine durchführen, welche besitzt:
- eine Hauptspindel mit einer Drehachse (C-Achse) in der der Hauptdrehachse einer zu bearbeitenden Welle entsprechenden Z-Richtung mit einem um die C-Achse drehbar antreibbaren ersten Spannfutter für die Welle und ein drehbar antreibbares zweites Spannfutter,
- wenigstens eine um eine parallel zu einer X-Richtung verlaufende A-Achse drehbare Werkzeugspindel, die in der X-, der Z- sowie einer Y-Richtung verfahrbar und positionierbar und in Z-Richtung feststellbar ist,
- ein Drehwerkzeug in Form eines Fingerfräsers mit drei Stirnschneiden aus aufgelöteten CBN-Schneidplatten, die jeweils eine Abschrägung aufweisen, die vom Außenumfang des Fingerfräsers zu dessen Längsachse hin um einen geringen Betrag abnimmt,
- eine Einrichtung zur Einstellung der Exzentrizität des Drehfräswerkzeugs in der Y-Achse um einen Betrag e zur Achse des zu bearbeitenden Lagers,
- wenigstens eine entlang der Z-Richtung verfahrbare Lünette mit wenigstens einer Abstützung für die Welle an einem ihrer Lager (HL)
- Messorgane zur Erfassung des individuellen Ergebnisses der Vorechnitt-Drehfräsebearbeitung der Bearbeitungsflächen der Welle und
- wenigstens eine Einrichtung zum Zustellen des Werkzeugs in der axialen Richtung in Abhängigkeit von dem erfassten Bearbeitungsergebnis.

Beim Bearbeiten der Lager einer Kurbelwelle in einer Maschine mit zwei drehbar antreibbaren Spannfuttern nimmt das erste Spannfutter die Kurbelwelle an deren Flanschseite und das zweite Spannfutter die Kurbelwelle an deren Zapfen auf. In jedem Falle ist die Kurbelwelle mit ihrer Drehachse längs der C-Achse (in der Z-Richtung) der Werkzeugmaschine eingespannt.

Die Drehachse (A-Achse) der Werkzeugspindel mit dem Drehfräswerkzeug verläuft parallel zur X-Richtung der Maschine, welche ihrerseits zur Z-Richtung orthogonal verläuft. Die Werkzeugspindel für das Drehfräswerkzeug weist auch eine Einrichtung auf, um die Werkzeugspindel zur Einstellung der Exzentrizität (des Versatzes) zwischen der Achse des zu bearbeitenden Lagers und der werkzeugachse in der Y-Richtung der Maschine einstellbar zu machen. Schließlich ist die Werkzeugspindel auch noch in der Z-Richtung der Werkzeugmaschine verfahr- und feststellbar, um die einzelnen Lagersitze nacheinander bearbeiten zu können.

Die Maschinensteuerung erlaubt besonders bevorzugt, statt der oben erläuterten Zustellbewegung des Fräsers allein in dessen Längsrichtung auch eine sowohl eine axiale Komponente (in X-Richtung) und eine radiale Komponente (in Y-Richtung) umfassende Zustellbewegung des Drehfräswerkzeugs beim Eintauchen in die zu bearbeitende Lagerstelle zu Beginn des Vorschnitt-Drehfräsens und des Fertigschnitt-Drehfräsens auszuführen. Dies gestattet, im Einzelfall durch eine für die spezifische Anwendung besonders geeignete Zustellbewegung flexibel auf besondere Verhältnisse zu reagieren.

Für die Bearbeitung der Sitzflächen von Hublagern weist die Werkzeugspindel eine Einrichtung auf, mit deren Hilfe sie koordiniert in Richtung der X-Achse und der Y-Achse oszillieren kann, so daß sie den Kreisbewegungen des Hublagers während der Drehung der Kurbelwelle um deren Hauptachse folgen kann.

Die Werkzeugspindel ist bevorzugt zur Aufnahme eines Fingerfräsers vorgesehen, dessen Schaft eine Länge im Verhältnis zu seinem Durchmesser hat, die zwischen 10:1,5 bis 10:3 liegt. Diese Schlankheit des Fingerfräsers ist die Voraussetzung dafür, daß alle Lagerflächen (Mantelflächen) bei sich drehender Kurbelwelle mit dem Werkzeug bearbeitet werden können. Die Schlankheit setzt aber auch voraus, daß der Schaft des Fingerfräsers eine hohe Biegesteifigkeit aufweist. Vorteilhaft ist es, wenn der Schaft des Fingerfräsers aus Hartmetall - oder sonstigen Materialien mit hoher Biegesteifigkeit - hergestellt ist. Die Einspannung der Fingerfräser erfolgt vorzugsweise in einem Schrumpffutter.

Um einen ruhigen und gleichmäßigen Schnitt zu erzielen, sind an dem Fingerfräser bevorzugt mindestens drei Stirnschneiden aus aufgelöteten oder anderweitig geeignet befestigten CBN-Schneidplatten (kubisch-kristallines Bornitrid) oder einem geeigneten anderen Schneidwerkstoff bestehende Schneidplatten vorgesehen.

Die CBN- oder sonstigen Schneidplatten weisen bevorzugt jeweils eine Abschrägung auf, so daß die Höhe der Schneidkanten über einer Normalebene vom Außenumfang des Fingerfräsers zu dessen Achse hin um einen geringen Betrag abnimmt. Durch eine solche Abschrägung läßt sich eine insbesondere bei Kurbelwellen günstige konvexe (ballige) Form der Lagerflächen erreichen. Der schräge Anschliff der stirnseitigen Werkzeugschneiden kann dabei insbesondere ca. 0,04 bis 0,1 mm betragen. Bevorzugt liegt das Verhältnis der Drehzahlen des bzw. der Spannfutter zur Drehzahl der Werkzeugspindel im Bereich von 1:400 bis 1:2000. Die Schnittgeschwindigkeiten liegen bevorzugt in der Größenordnung zwischen 80 bis 600 m/min. Das Werkzeug kann bei Bedarf innen gekühlt werden.

Eine bevorzugt vorzusehende Abstützung der jeweils nicht in Bearbeitung befindlichen Lagersitze durch eine Lünette (s.o.) erfolgt zweckmäßigerweise an drei Punkten eines Hauptlagers, von denen einer in der X-Richtung (gegenüber dem Drehfräswerkzeug) liegt. Um Störungen der Abstützung durch die notwendigen Ölbohrungen in den Haupt- und Hublagern auszuschließen, sind die Abstützflächen der Lünette bevorzugt als Gleitsteine ausgebildet, die im Bereich der Ölbohrungen der Hauptlagersitze jeweils eine Aussparung in Form einer Nut aufweisen. Zusätzlich können die Gleitsteine der Oberflächenkontur der Mantellinie des Lagers angepaßt sein, insbesondere über einen auf den Lagerdurchmesser abgestimmten Hohlschliff. Dies verhindert das Eindringen von Spänen in den Bereich der Abstützung der Welle an dem betreffenden Gleitstein der Lünette und beugt auf diese Weise einer Beschädigung der zum Abstützen der Welle herangezogenen Lager vor.

Die besonderen Vorteile der vorliegenden Erfindung zeigen sich, wie vorstehend ausgeführt, namentlich bei Kurbel- und sonstigen Wellen, deren Lagersitze gehärtet sind. Ist eine Härtung der Lagersitze allerdings weder im Hinblick auf deren Schutz während des weiteren Handlings noch im Hinblick auf die angestrebte Verschleißsicherheit erforderlich, kommt in Betracht, die erfindungsgemäße Verfahrensführung ohne Härtung der Lagersitze einzusetzen. In diesem Falle würden an die Schneiden des Drehfräswerkzeugs geringere Anforderungen gestellt werden. Zudem könnte, da der sich regelmäßig beim Härten einstellende Verzug entfällt, das Aufmaß für die Drehfräsbearbeitung geringer ausfallen als bei gehärteten Lagersitzen, was unter Gesichtspunkten der Fertigungsökonomie günstig ist.

Nachfolgend wird die Erfindung an einem Ausführungsbeispiel näher beschrieben.

Es zeigen jeweils in nicht maßstäblicher und teilweise stark vereinfachter Darstellung
- Fig. 1: eine Vier-Zylinder-Kurbelwelle in perspektivischer Ansicht,
- Fig. 2: ein zur erfindungsgemäßen Bearbeitung der Lagersitze der Kurbelwelle nach Fig. 1 einsetzbares Drehfräswerkzeug in der Seitenansicht in verkleinertem Maßstab,
- Fig. 3: das Drehfräswerkzeug der Fig. 2 in einer Draufsicht in Richtung des Pfeils A der Fig. 2 in vergrößertem Maßstab,
- Fig. 4: das stirnseitige Ende des Drehfräswerkzeugs in der Seitenansicht in vergrößertem Maßstab,
- Fig. 5: das Bearbeiten eines Hauptlagers der Kurbelwelle nach Fig. 1 im Schnitt,
- Fig. 5a: in einer Vektordarstellung den relativen Vorschub während verschiedener Phasen der Drehfräs-bearbeitung,
- Fig. 6: das Abstützen eines anderen Hauptlagers im Schnitt und
- Fig. 7: die Draufsicht auf einen Gleitstein der Lünette.

Die - spanabhebend vorgeformte, und gegebenenfalls gehärtete und richtgewalzte - Kurbelwelle 1 ist um ihre Hauptdrehachse 2 in der Werkzeugmaschine (nicht gezeigt) drehbar eingespannt, in welcher ihre Haupt- und Hublagersitze bearbeitet werden. Am Zapfen 3 beginnend sind die Hauptlager nacheinander als HL 1 bis HL 5 bezeichnet. Ähnlich ist die Zählung der Hublager, welche in der Zeichnung vom Zapfen 3 her beginnend nacheinander die Bezeichnungen PL 1 bis PL 4 tragen. Das dem Zapfen 3 gegenüberliegende Ende der Kurbelwelle 1 ist der Flansch 4. Im vorliegenden Beispiel wird die Kurbelwelle 1 am Flansch 4 von einem Spannfutter gespannt, von dem zwei Spannbacken 5 dargestellt sind. Die Spannkräfte wirken entsprechend der Richtung der Pfeile 6 in radialer Richtung auf den Flansch 4.

Die Drehachse 2 der Kurbelwelle 1 ist zugleich die um Z-Richtung verlaufende C-Achse der Werkzeugmaschine. Beginnend am Flansch 4 werden nacheinander die Hauptlager HL 5 bis HL 1 der Kurbelwelle 1 gemäß dem Pfeil 9 bearbeitet. Während der Bearbeitung in Richtung des Pfeils 9, X-Richtung der Werkzeugmaschine, erfolgt das Abstützen der Kurbelwelle 1 in Richtung des der Bearbeitungsrichtung entgegengesetzten Pfeils 10. Das Abstützen in Richtung des Pfeils 10 erfolgt durch eine oder zwei Lünetten (nicht gezeigt) der Werkzeugmaschine. Dabei erfolgt eine Bearbeitung von HL 5 bei Abstützung an HL 4, eine Bearbeitung von HL 4 bei Abstützung an HL 3, eine Bearbeitung von HL 3 bei Abstützung an HL 4 und/oder HL 2, eine Bearbeitung von HL 2 bei Abstützung an HL 3 und eine Bearbeitung von HL 1 bei Abstützung an HL 2. Ähnlich gestaltet sich das Abstützen bei der Bearbeitung der Hublager PL 1 bis PL 4. Bei einer Bearbeitung von PL 1, beispielsweise in der Bearbeitungsrichtung 11, erfolgt das Abstützen an HL 1 und/oder HL 2. Die Bearbeitung von PL 2 wiederum erfolgt bei Abstützung an HL 2 und/oder HL 3, die Bearbeitung von PL 3 bei Abstützung an HL 3 und/oder HL 4 und schließlich die Bearbeitung von PL 4 bei Abstützung an HL 4 oder HL 5. Der Einfachheit halber wird angenommen, daß die Bearbeitungsrichtung 11 der Bearbeitungsrichtung 9 und somit der X-Richtung der Werkzeugmaschine entspricht.

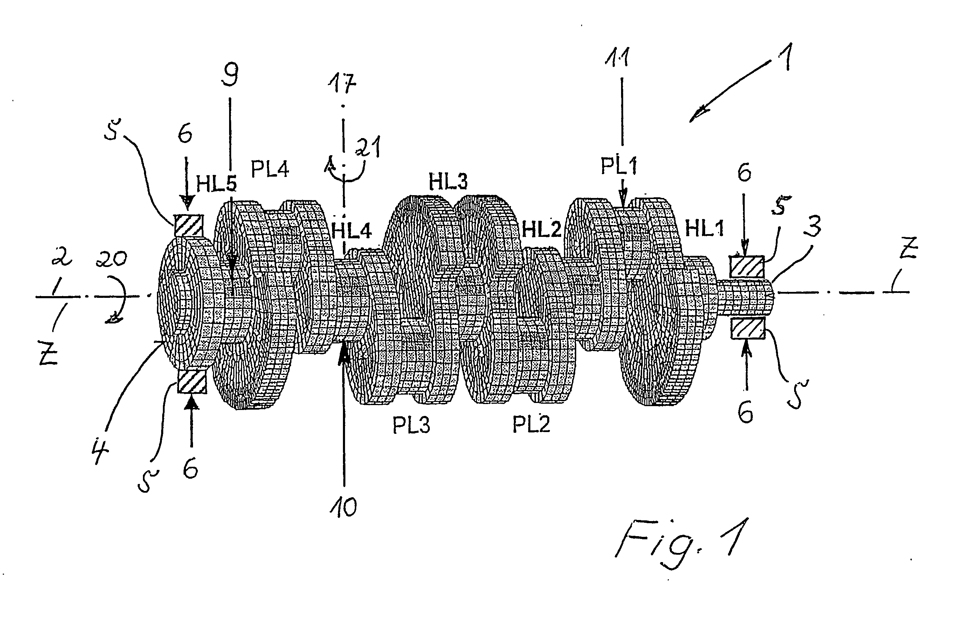

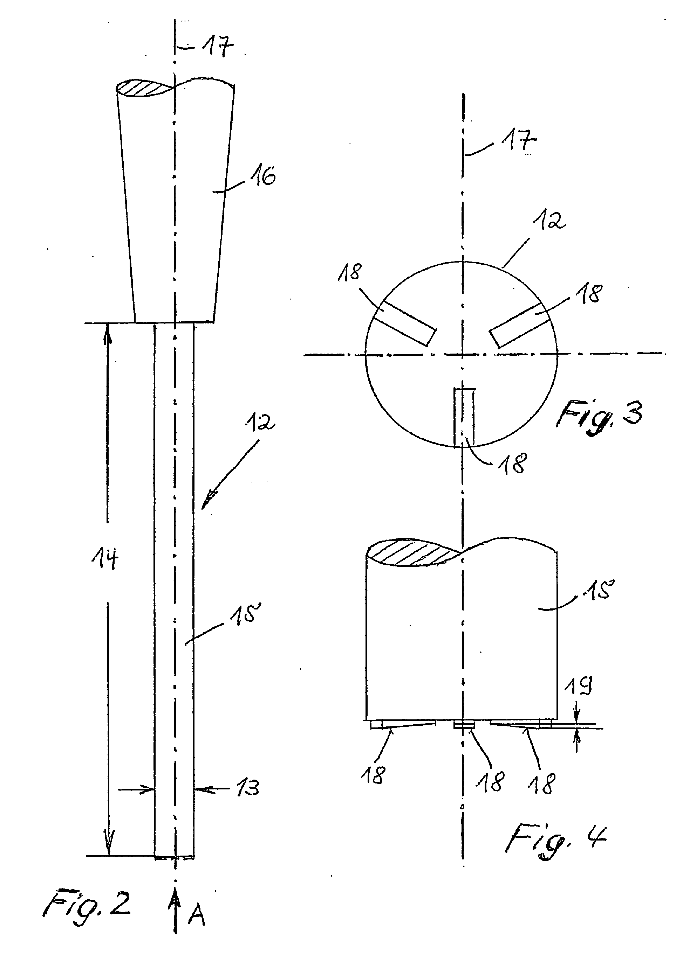

Für das Bearbeiten der Lagersitze HL und PL ist ein Fingerfräser 12 vorgesehen, wie er in der Fig. 2 dargestellt ist. Im vorliegenden Ausführungsbeispiel beträgt der Durchmesser 13 des Fingerfräsers 24 mm, während die Breite der Hauptlagersitze HL und der Hublagersitze PL 19 mm beträgt. Dementsprechend ist während der Vorbearbeitung der Kurbelwelle an jedem der Lagersitze beidseitig jeweils ein Freistich von 2,5 mm eingebracht worden, in denen der Fräser auslaufen kann. Im Verhältnis zu seinem Durchmesser 13 hat der Schaft 15 des Fingerfräsers 12 eine große Länge 14. Die große Länge 14 des Schafts 15 macht es möglich, daß beispielsweise die Hublagerflächen PL 1 oder PL 4 aus den Richtungen 9 und 11 auch dann bearbeitet werden können, wenn sie sich - nach etwa einer halben Drehung der Kurbelwelle - in der unteren Lage befinden, in der in Fig. 1 die beiden inneren Hublager dargestellt sind. Zu diesem Zweck besitzt der Schaft 15 des Fingerfräsers 12 eine hohe Biegesteifigkeit. Der Schaft 15 steckt in einer üblichen Werkzeugaufnahme 16 der Werkzeugspindel (nicht gezeigt) der Werkzeugmaschine. Die Drehachse 17 des Fingerfräsers 12 liegt zugleich parallel zu der X-Richtung der Werkzeugmaschine.

Aus der Richtung des Pfeils A betrachtet (Fig. 3) weist der Fingerfräser 12 drei Schneidplatten 18 auf, welche gleichmäßig über den Umfang verteilt sind. Die Schneidplatten 18 bestehen aus kubisch-kristallinem Bornitrid, kurz CBN. Zur Drehachse 17 hin weisen die Schneidplatten 18 jeweils eine geringe Abschrägung 19 auf.

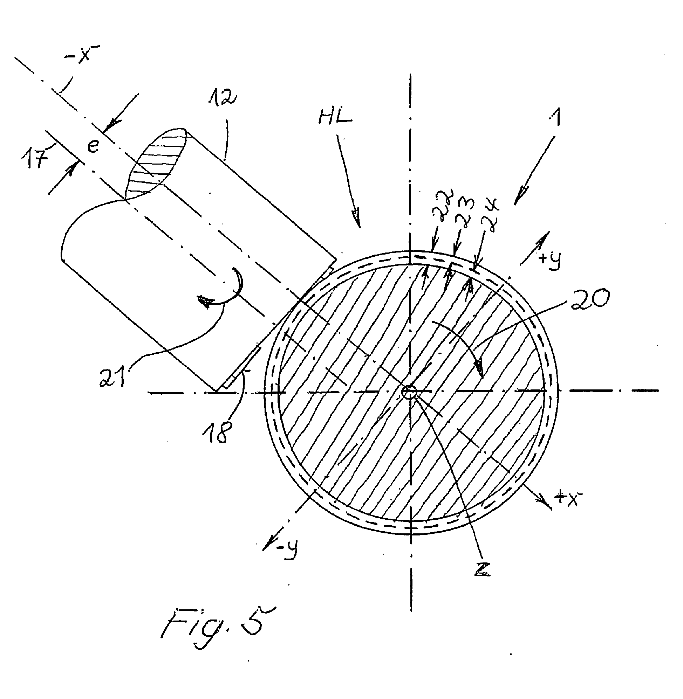

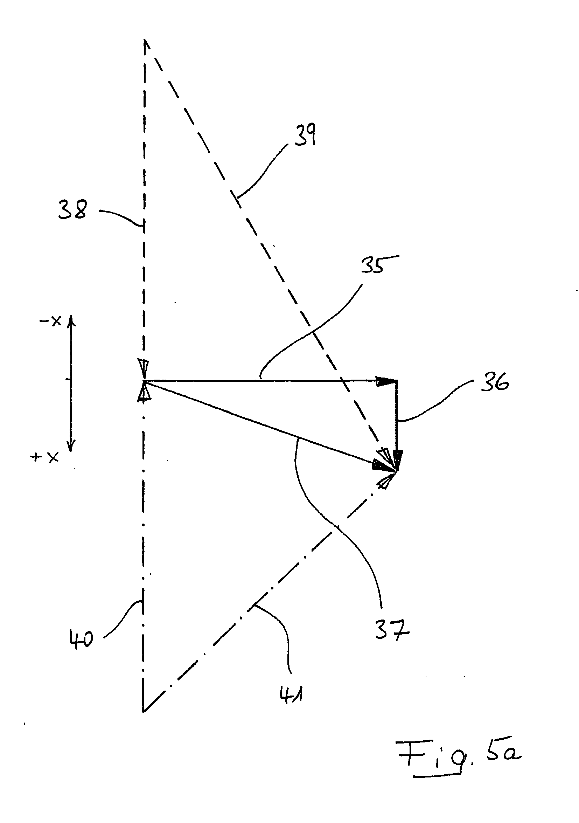

Die Fig. 5 zeigt einen Schnitt durch ein beliebiges Hauptlager HL der Kurbelwelle 1. In Richtung der Drehachse 2 befindet sich die C-Achse der Werkzeugmaschine; die mit der C-Achse zusammenfallende Z-Achse liegt also senkrecht zur Darstellungsebene. Orthogonal dazu erstreckt sich die X-Achse und wiederum orthogonal zur X-Achse und zur Z-Achse die Y-Achse. Gegenüber der X-Achse ist die Drehachse 17 des Fingerfräsers 12 um den Versatz e, der im vorliegenden Ausführungsbeispiel etwa 4 bis 5 mm beträgt, in Y-Richtung verschoben. Die Drehrichtung der Kurbelwelle 1 wird durch den gekrümmten Pfeil 20 und die Drehrichtung des Fingerfräsers 12 durch den gekrümmten Pfeil 21 angegeben.

Für die mehrstufige Drehfräsbearbeitung des Hauptlagers HL ist das Aufmaß 22 (z.B. 0,35 mm) vorgesehen. Während des Vorschnitts, bei dem die Kurbelwelle 1 etwa eine volle Umdrehung in der Richtung 20 macht, wird eine äußere Schicht 23 mit einer vorgegebenen Dicke (Schruppaufmaß z.B. 0,25 mm) vom Hauptlager HL abgetragen. Unmittelbar darauf, d.h. ohne Umspannen der Welle, erfolgt nach einem Vermessen des Lagers nach dem Vorschnitt im Feinschnitt das Abtragen der inneren Schicht 24 (Schlichtaufmaß z.B. 0,1 mm), wobei sich die Kurbelwelle 1 wiederum in der Drehrichtung 20 dreht und der Fingerfräser 12 in der Drehrichtung 21. Eine Umkehr der Drehrichtung 20 und 21 für den Feinschnitt ist nicht vorgesehen, aber durchaus auch möglich. Während des Feinschnitts macht die Kurbelwelle 1 etwas mehr als eine volle Umdrehung. Zusammen mit dem Drehwinkelbereich für das Eintauchen des Werkzeugs zu Beginn der Feinschnitt-Drehfräsbearbeitungsstufe ist das Werkzeug hier etwa über einen Winkelbereich von 420° im Eingriff.

Die Fig. 5a veranschaulicht über eine Vektordarstellung den relativen Vorschub beim Eintauchen (gestrichelt) des Fingerfräsers 12 in das Material, d.h. beim Anschnitt, beim Umlauf (durchgezogen) und beim Austritt (strichpunktiert) des Fingerfräsers. Bedingt durch die geometrischen Verhältnisse (Exzentrizität e, Lagerdurchmesser, Durchmesser des Fräsers, Schneidengeometrie etc.) liegt beim Umlauf kein rein tangentialer relativer Vorschub vor; vielmehr ist der tangentialen Komponente 35 eine - übertrieben groß dargestellte - radiale Komponente 36 überlagert, woraus sich während des Umlaufs der als Vektor dargestellte relative Vorschub 37 ergibt. Während des Anschnitts kommt die Zustellbewegung 38 des Fräsers 12 längs dessen Längsachse (in X-Richtung) hinzu. Der durch Überlagerung mit dem Vektor 37 resultierende relative Vorschub während des Anschnitts ist durch den entsprechenden Anschnitt- bzw. Eintauchvektor 39 veranschaulicht. Während des Austritts des Fräsers nach dem vollständigen Umlauf der Welle kommt zu dem relativen Vorschub 37 die - in -X-Richtung erfolgende - Zustellbewegung 40 des Fräsers 12 hinzu. Der durch Überlagerung mit dem Vektor 37 resultierende relative Vorschub während des Austritts des Fräsers ist durch den entsprechenden Austrittsvektor 41 veranschaulicht. Die jeweilige Größe der Zustellbewegungen 38 und 40 wird vorab experimentell ermittelt, wobei dabei die Drehrichtung der Welle entweder in oder entgegen der Richtung des Versatzes der Fräserachse gegenüber der Wellenachse zu berücksichtigen ist. Als Anhaltspunkt für die Ermittlung der Größenordnung der Zustellgeschwindigkeit in Abhängigkeit von den übrigen Bearbeitungsparametern sowie den geometrischen Verhältnissen kann gelten, daß der Anschnitt sich bevorzugt über einen Winkelbereich von 3° bis 15° der Drehung der Welle erstreckt.

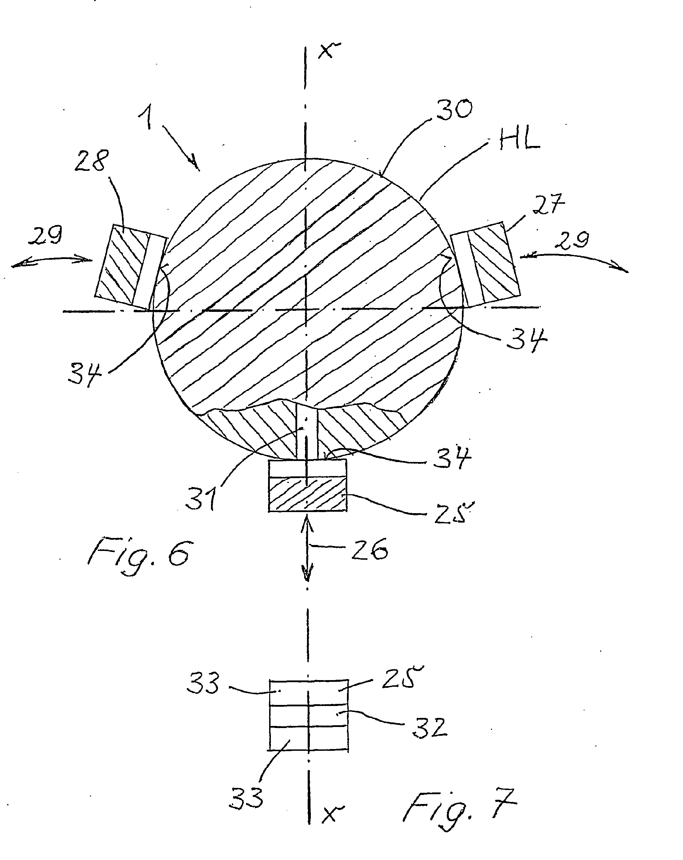

Wie bereits erwähnt wird die Kurbelwelle 1 bei der mehrstufigen Drehfräsbearbeitung eines Hauptlagers HL von einer oder zwei Lünetten (nicht gezeigt) der Werkzeugmaschine abgestützt. Das Abstützen erfolgt primär in der X-Richtung, die in der Fig. 6 in vertikaler Richtung dargestellt ist. Zum Abstützen dient ein Gleitstein 25, welcher in den beiden Richtungen 26 längs der X-Achse beweglich ist. Neben der Abstützung in der X-Richtung durch den Gleitstein 25 erfolgt zusätzlich noch eine Abstützung durch zwei weitere Gleitsteine 27 und 28, welche jeweils in radialen Richtungen 29 auf den Hauptlagersitz HL der Kurbelwelle 1 zu- und wieder wegbewegt werden können. Ein Mechanismus (nicht gezeigt) der Lünette koordiniert die drei Bewegungen 26 und 29 in der weise, daß sich die Gleitsteine 27 und 28 auf das Hauptlager HL zubewegen, während sich der Gleitstein 25 in Richtung des Doppelpfeils 26 nach unten bewegt. Umgekehrt bewegen sich die Gleitsteine 27 und 28 in Richtung des Doppelpfeils 29 vom Hauptlager HL weg, während sich der Gleitstein 25 in Richtung des Doppelpfeils 26 nach oben bewegt. Ein an sich bekannter Mechanismus, der hier nicht weiter beschrieben werden braucht, sorgt für die Koordination der Bewegungen 26 und 29.

Der Lagersitz 30 des Hauptlagers HL wird aber auch von einer Ölbohrung 31 unterbrochen. Vom Rand dieser Ölbohrung 31 können Störungen ausgehen, die sich beim Rotieren der Kurbelwelle 1 einstellen, während das Hauptlager HL von den Gleitsteinen 25, 27 und 28 abgestützt wird. Zur Vermeidung derartiger Störungen sind die Gleitsteine 25, 27 und 28 jeweils mit einer Nut 32 versehen. Die Nut 32 bewirkt, daß der abstützende Anteil 33 an der gesamten Stützfläche der Gleitsteine 25, 27 und 28 geringer ist als deren jeweilige Querschnittsfläche 34, welche dem Hauptlager HL während der Abstützung zugewandt ist. Nicht dargestellt ist in der Zeichnung die mögliche Anpassung der Gleitsteine an die Mantellinie des zu fertigenden Lagersitzes mittels eines Hohlschliffs (s.o.).

## Patentansprüche

1. Verfahren zum Bearbeiten der Lagersitze (HL1 bis HAL5 und PL1 bis PL4) von durch Schmieden oder Gießen urgeformten Wellen, insbesondere Kurbelwellen (1), wobei die Lagersitze (HL, PL) nach dem Urformen durch spanabhebende Bearbeitung mit bestimmter Schneide vorgeformt und den folgenden Bearbeitungsoperationen unterzogen werden:
- Vorschnitt-Drehfräsen und
- Fertigschnitt-Drehfräsen mit einem einzigen Stirnfräser (12),
**dadurch gekennzeichnet, dass** das Vorschnitt-Drehfräsen und das Fertigschnitt-Drehfräsen während jeweils im wesentlichen einer vollständigen Umdrehung (20) der Welle (1) ohne Längsvorschub und ohne tangentialen Vorschub (35) des Fräsers (12) erfolgt und die Zustellung des Fräsers (12) während des Eintauchens (39) zu Beginn des Vorschnitt-Drehfräsens und zu Beginn des Fertigschnitt-Drehfräsens bezogen auf die Achse (17) des Fräsers (12) allein eine axiale Komponente (38) aufweist, während die Welle um einen bestimmten Betrag gedreht wird, wobei die Achse des Drehfräswerkzeugs während der Drehfräsbearbeitung gegenüber der Achse des zu bearbeitenden Lagersitzes um eine Exzentrizität (e) versetzt ist.

2. Verfahren nach Anspruch 1,
**dadurch gekennzeichnet,**
**dass** die Welle nach dem Vorformen und vor der Drehfräsbearbeitung den Bearbeitungsoperationen
- Härten und
- Richtwalzen
unterzogen wird.

3. Verfahren nach Anspruch 1,
**dadurch gekennzeichnet,**
**dass** sich an das Fertigschnitt-Drehfräsen ein Finishen mit unbestimmter Schneide anschließt.

4. Verfahren nach Anspruch 1 oder 2,
**dadurch gekennzeichnet,**
**dass** sich der Anschnitt während des Eintauchens (39) des Fräsers (12) auf 3° bis 15°, bevorzugt etwa 5° Wellendrehwinkel erstreckt und das Drehfräsen mit einem Versatz (e) der Fräserachse (17) zur Achse des Lagersitzes vom 0,15- bis 0,2-flachen Durchmesser (13) des Fräsers (12) erfolgt.

5. Verfahren nach Anspruch 1,
**dadurch gekennzeichnet,**
**dass** während des Vorformens beidseitig des zu erzeugenden Lagersitzes jeweils ein Freistich eingebracht wird.

6. Verfahren nach Anspruch 1
**dadurch gekennzeichnet,**
**dass** die Lagersitze (HL1 bis HL5 und PL1 bis PL4) einer Kurbelwelle (1) bearbeitet werden, die zum Drehfräsen auf der Seite ihres Flansches (4) in einem ersten Spannfutter (5) und auf der Seite ihres Zapfens (3) in einem zweiten Spannfutter (5) eingespannt ist und der Durchmesser (13) des Drehfräsers (12) den 1,15- bis 1,35-fachen Betrag der Breite des zu bearbeitenden Lagersitzes (HL1 bis HL5 bzw. PL1 bis PL4) aufweist.

7. Verfahren nach Anspruch 1
**dadurch gekennzeichnet,**
**dass** bei der Bearbeitung der Hauptlagersitze (HL) nacheinander jeder einzelne Hauptlagersitz (HL1 bis HL5) mit einem einzigen Drehfräswerkzeug (12) zwischenbearbeitet wird, während die Kurbelwelle (1) gleichzeitig an einem jeweils benachbarten Hauptlager (HL) in radialer Richtung von einer Lünette abgestützt wird und bei der Bearbeitung der Hublagersitze (PL) nacheinander jeder einzelne Hublagersitz (PL1 bis PL4) mit einem einzigen Drehfräswerkzeug (12) zwischenbearbeitet wird, während die Kurbelwelle (1) gleichzeitig an einem jeweils benachbarten Hauptlager (HL) in radialer Richtung von einer Lünette abgestützt wird.

8. Verfahren nach Anspruch 1,
**dadurch gekennzeichnet,**
**dass** das Fertigschnitt-Drehfräsen mehr als 360° Drehwinkel der Welle umfasst und der Beginn der Zerspanung beim Vorschnitt-Drehfräsen und/oder beim Fertigschnitt-Drehfräsen im Bereich einer Ölbohrung (31) erfolgt.

9. Verfahren nach Anspruch 1,
**dadurch gekennzeichnet, dass** die Welle nach dem Vorschnitt-Drehfräsen vermessen und die Zustellung des Fräsers (12) für das Fertigschnitt-Drehfräsen in Abhängigkeit vom Ergebnis dieser Messung ermittelt wird.

10. Verfahren nach Anspruch 9,
**dadurch gekennzeichnet,**
**dass** nach dem Vorschnitt-Drehfrägen die Messung der Durchmesser der Haupt- (HL) und Hublager (PL) und danach die Zustellung für den Fertigschnitt über ein eigenes individuelles NC-Steuerungsprogramm der NC-Steuerung der Bearbeitungsmaschine vorgenommen wird, bei dem das individuelle Bearbeitungsergebnis der vorschnitt-Drehfräsbearbeitung unmittelbar erfasst und im NC-Programm der Maschine für die Bearbeitung des betreffenden Lagersitzes (HL bzw. PL) während der Fertigschnitt-Drehfräsbearbeitung verwendet wird.

## Claims

1. A method for machining the bearing seats (HL1 to HL5 and PL1 to PL4) of shafts that are primary-formed by means of forging or casting, particularly crankshafts (1), wherein the bearing seats (HL, PL) are pre-formed by means of material removal with a defined cutting edge after the primary forming and subjected to the following machining operations:
- preliminary rotary milling and
- final rotary milling with a single face milling cutter (12),
**characterized in that** the preliminary rotary milling process and the final rotary milling process respectively take place during essentially one complete revolution (20) of the shaft (1) without longitudinal advance and without tangential advance (35) of the milling cutter (12), and **in that** the advance of the milling cutter (12) has during the plunge (39) at the beginning of the preliminary rotary milling process and at the beginning of the final rotary milling process only an axial component (38) referred to the axis (17) of the milling cutter (12) while the shaft is turned by a certain angle, wherein the axis of the rotary milling cutter is arranged offset relative to the axis of the bearing seat to be machined by an eccentricity (e) during the rotary milling operation.

2. The method according to Claim 1,
**characterized in**
**that** the shaft is subsequent to the pre-forming and prior to the rotary milling operation subjected to the machining operations
- hardening and
- passing through dressing rollers.

3. The method according to Claim 1,
**characterized in**
**that** finishing with an undefined cutting edge is carried out after the final rotary milling process.

4. The method according to Claim 1 or 2,
**characterized in**
**that** the start of the cut during the plunge (39) of the milling cutter (12) extends over a rotational angle of the shaft between 3° and 50°, preferably about 5°, and in that the rotary milling operation is carried out with an offset (e) of the milling cutter axis (17) relative to the axis of the bearing seat that amounts to 0.15-times to 0.2-times the diameter (13) of the milling cutter (12).

5. The method according to Claim 1,
**characterized in**
**that** an undercut is respectively produced to both sides of the bearing seat to be machined during pre-forming.

6. The method according to Claim 1,
**characterized in**
**that** the machining is carried out on bearing seats (HL1 to HL5 and PL1 to PL4) of a crankshaft (1) that is clamped in a first chuck (5) on the side of its flange (4) and in a second chuck (5) on the side of its journal (3) for the rotary milling operation, and in that the diameter (13) of the rotary milling cutter (12) amounts to 1.15-times to 1.35-times the width of the bearing seat (HL1 to HL5 and PL1 to PL4) to be machined.

7. The method according to Claim 1,
**characterized in**
**that** each individual main bearing seat (HL1 to HL5) is intermediately machined in succession with a single rotary milling cutter (12) during the machining of the main bearing seats (HL) while the crankshaft (1) is simultaneously supported in the radial direction by means of a back rest on a respectively adjacent main bearing (HL), and in that each individual pin bearing seat (PL1 to PL4) is intermediately machined in succession with a single rotary milling cutter (12) during the machining of the pin bearing seats (PL) while the crankshaft (1) is simultaneously supported in the radial direction by means of a back rest on a respectively adjacent main bearing (HL).

8. The method according to Claim 1,
**characterized in**
**that** the final rotary milling process comprises a rotational angle of the shaft in excess of 360° and the material removal during the preliminary rotary milling process and/or during the final rotary milling process begins in the region of an oil bore (31).

9. The method according to Claim 1,
**characterized in**
**that** the shaft is measured after the preliminary rotary milling process and the advance of the milling cutter (12) for the final rotary milling process is determined in dependence on the result of this measurement.

10. The method according to Claim 9,
**characterized in**
**that** the diameter of the main bearings (HL) and the pin bearings (PL) is measured after the preliminary rotary milling process and the advance for the final machining process is subsequently realized by means of an individual NC control program of the NC control of the processing machine, wherein the individual machining result of the preliminary rotary milling process is directly determined and used in the NC program of the machine for machining the respective bearing seat (HL or PL) during the final rotary milling process.

## Revendications

1. Procédé destiné à l'usinage des portées de palier (HL1 à HL5 et PL1 à PL4) d'arbres initialement formés par forgeage ou moulage, en particulier de vilebrequins (1), les portées de palier (HL, PL) étant préformées après le formage initial par usinage par enlèvement de copeaux avec un certain outil de coupe et soumises aux opérations d'usinage suivantes :
- fraisage d'ébauche au tour et
- fraisage de finition au tour avec une fraise en bout unique (12), **caractérisé en ce**
**que** le fraisage d'ébauche au tour et le fraisage de finition au tour ont lieu à chaque fois pour l'essentiel pendant une révolution complète (20) de l'arbre (1) sans avance longitudinale et sans avance tangentielle (35) de la fraise (12) et en ce que l'approche de la fraise (12) pendant la plongée (39) au début du fraisage d'ébauche au tour et au début du fraisage de finition au tour par rapport à l'axe (17) de la fraise (12) présente seulement une composante axiale (38), pendant que l'arbre est tourné d'une certaine quantité, l'axe de l'outil de fraisage au tour étant, pendant l'usinage de fraisage au tour, décalé d'une excentricité (e) par rapport à l'axe de la portée de palier à usiner.

2. Procédé selon la revendication 1, **caractérisé en ce que** l'arbre est soumis, après le préformage et avant l'usinage par fraisage au tour, aux opérations de traitement de
- trempe et
- laminage de dressage.

3. Procédé selon la revendication 1, **caractérisé en ce qu'**une finition avec un outil de coupe indéfini, fait suite au fraisage de finition au tour.

4. Procédé selon la revendication 1 ou 2, **caractérisé en ce que** l'attaque pendant la plongée (39) de la fraise (12) s'étend sur un angle de rotation d'arbre de 3° à 15°, de préférence environ 5°, et **en ce que** le fraisage au tour a lieu avec un déport (e) de l'axe de fraise (17) par rapport à l'axe de la portée de palier, de 0,15 à 0,2 fois le diamètre (13) de la fraise (12).

5. Procédé selon la revendication 1 **caractérisé en ce que** pendant le préformage une rainure de dégagement est à chaque fois mise en place des deux côtés de la portée de palier à produire.

6. Procédé selon la revendication 1 **caractérisé en ce que** l'on usine les portées de palier (HL1 à HLS et PL1 à PL4) d'un vilebrequin (1) qui est serré pour le fraisage au tour sur le côté de sa bride (4) dans un premier mandrin de serrage (5) et sur le côté de son tourillon (3) dans un deuxième mandrin de serrage (5) et **en ce que** le diamètre (13) de la fraise de tournage (12) présente 1,15 à 1,35 fois le montant de la largeur de la portée de palier à usiner (HL1 à HL5 ou PL1 à PL4).

7. Procédé selon la revendication 1 **caractérisé en ce que** lors de l'usinage des portées de palier principales (HL) l'une derrière l'autre, chaque portée de palier principal individuelle (HL1 à HL5) est usinée de façon intermédiaire avec un outil de fraisage au tour (12) unique pendant que le vilebrequin (1) est simultanément soutenu dans le sens radial par une lunette sur un palier principal à chaque fois voisin et **en ce que** lors de l'usinage des portées de maneton (PL) l'une derrière l'autre, chaque portée de maneton individuelle (PL1 à PL4) est usinée de façon intermédiaire avec un outil de fraisage au tour (12) unique pendant que le vilebrequin (1) est simultanément soutenu dans le sens radial par une lunette sur un palier principal (HL) à chaque fois voisin.

8. Procédé selon la revendication 1 **caractérisé en ce que** le fraisage de finition au tour comporte un angle de rotation de l'arbre supérieur à 360° et **en ce que** le début de l'enlèvement des copeaux lors du fraisage d'ébauche au tour et/ou du fraisage de finition au tour a lieu dans la zone d'un orifice de graissage (31).

9. Procédé selon la revendication 1 **caractérisé en ce que** l'arbre est mesuré après le fraisage d'ébauche au tour et **en ce que** l'approche de la fraise (12) pour le fraisage de finition au tour est déterminée en fonction du résultat de cette mesure.

10. Procédé selon la revendication 9 **caractérisé en ce qu'**après le fraisage d'ébauche au tour, la mesure des diamètres des paliers principaux (HL) et des manetons (PL) et ensuite l'approche pour la finition sont effectuées par un programme de commande numérique (CN) individuel de la commande numérique (CN) de la machine d'usinage pour lequel le résultat d'usinage individuel du fraisage d'ébauche au tour est directement saisi et utilisé dans le programme de CN de la machine pour l'usinage de la portée de palier concernée (HL ou PL) pendant le fraisage de finition au tour.
